# EUROPÄISCHE PATENTSCHRIFT

(11) **EP 4 146 525 B1**
(45) Veröffentlichungstag und Bekanntmachung des Hinweises auf die Patenterteilung: **26.11.2025**
(21) Anmeldenummer: 21725060.4
(22) Anmeldetag: 04.05.2021
(51) Int. Cl.: B62D 5/04

(54) **VARIABLE LENKUNTERSTÜTZUNG IN ABHÄNGIGKEIT VON ZAHNSTANGENBEWEGUNGEN**
VARIABLE STEERING ASSISTANCE ACCORDING TO GEAR RACK MOVEMENTS
ASSISTANCE DE DIRECTION VARIABLE EN FONCTION DES MOUVEMENTS DE CRÉMAILLÈRE

(30) Priorität: 08.05.2020 DE 102020205838
(43) Veröffentlichungstag der Anmeldung: 15.03.2023
(73) Patentinhaber: VOLKSWAGEN AKTIENGESELLSCHAFT, 38440 Wolfsburg (DE)
(72) Erfinder: BARTELS, Alexander, 38102 Braunschweig (DE); SACHWITZ, Martin, 38118 Braunschweig (DE)
(86) Internationale Anmeldenummer: PCT/EP2021/061681
(87) Internationale Veröffentlichungsnummer: WO 2021/224230

(56) Entgegenhaltungen:
- DE-A1- 102012 011 510
- DE-A1- 102014 206 468
- US-A1- 2019 031 231

## Beschreibung

Die Erfindung betrifft ein Verfahren zum Betreiben eines elektromechanischen Lenksystems, ein Lenksystem, ein Steuergerät für ein solches Lenksystem und ein Fahrzeug umfassend ein solches Lenksystem. Allgemein richtet sich die Erfindung auf Fahrzeuge und insbesondere Kraftfahrzeuge, wie z.B. Personenkraftwagen oder Lastkraftwagen.

Es ist bekannt, bei Fahrzeuglenksystemen einen Fahrer mittels Aktoren zum Erzeugen gewünschter Lenkmomente zu unterstützen. Hierdurch sollen Reibkräfte innerhalb des Lenksystems für den Fahrer weniger stark spürbar sein und kann allgemein der Komfort aus Sicht eines Fahrers verbessert werden.

Insbesondere bekannt sind elektromechanische Lenksysteme, bei denen ein Elektromotor ein sogenanntes Unterstützungsmoment zusätzlich zu einem vom Fahrer erzeugten Handmoment aufbringt. Es kann aber ebenso vorgesehen sein, entsprechende Lenkmomente fahrerautonom bzw. unabhängig von dem Vorliegen eines Fahrerlenkwunsches zu erzeugen, beispielsweise um Fahrerassistenzfunktionen, wie sogenannte Spurhalterassistenten, bereitzustellen.

Oftmals wirken sowohl die vom Fahrer erzeugten Lenkkräfte bzw. Lenkmomente (siehe das obige Handmoment) wie auch das vom Aktor und insbesondere einem Elektromotor erzeugte Unterstützungsmoment auf eine Zahnstange ein. Diese wird nach Maßgabe der aufgebrachten Momente linear verschoben, was über weitere mechanische Glieder in eine Rotation der Fahrzeugräder um eine im Wesentlichen vertikale Raumachse zum Einstellen eines Radlenkwinkels umgesetzt wird.

Das Unterstützungsmoment wird bisher meist gemäß einer vorab festgelegten Vorgabe erzeugt, die einen Zusammenhang zwischen einem Lenkwunsch des Fahrers und dem zusätzlich aufzubringenden Unterstützungsmoment definiert. Typischerweise ist dieser Zusammenhang linear bzw. proportional, sodass mit steigenden Handmomenten des Fahrers, die entsprechend ausgeprägte Fahrerlenkwünsche repräsentieren, entsprechend zunehmende Unterstützungsmomente erzeugt werden. Dies bedeutet jedoch im Umkehrschluss, dass bei geringen Lenkwünschen, wie sie insbesondere zu Beginn beim Auslenken aus einer Gleichgewichtslage mit konstantem Radlenkwinkel auftreten, geringere Unterstützungsmomente wirken.

Aus Sicht des Fahrers kann dies dazu führen, dass er die Lenkung zu Beginn eines Lenkvorgangs als eher schwergängig empfindet, da sein Lenkwunsch nur mit geringer Unterstützung und somit subjektiv verlangsamt in einen Radlenkwinkel umgesetzt wird. Dies kann als eine wenig sportliche und/oder wenig direkte Lenkung empfunden werden.

Alternativ besteht die Möglichkeit, die Unterstützungsvorgabe derart anzupassen, dass diese bereits bei geringen Handmomenten hohe Unterstützungsmomente aufbringt und dies mit zunehmenden Handmomenten dann proportional fortsetzt. Aufgrund dieser entsprechend ausgeprägten Lenkunterstützung kann die Lenkung aus Sicht des Fahrers aber wenig direkt und/oder wenig sportlich wirken.

Die EP 1 125 824 A1 offenbart ein elektromechanisches Lenksystem für ein Fahrzeug, bei dem ein Handmoment erfasst und einem Regler zugeführt wird, der darauf basierend einen Elektromotor ansteuert. Weiter können im Rahmen einer Vorsteuerung zusätzliche Unterstützungsmomente erzeugt werden.

Die US 2010/0280716 A1 offenbart ein elektromechanisches Lenksystem, bei dem ein Unterstützungsmoment nach Maßgabe unterschiedlicher vom Fahrer auswählbarer Übersetzungsverhältnisse erzeugbar ist. Insbesondere wird eine Lösung offenbart, um infolge eines Wechsels dieses Übersetzungsverhältnisses die erzeugten Unterstützungsmomente ohne Komforteinbuße anzupassen.

Aus der DE 10 2012 011 510 A1 ist ein gattungsgemäßes Verfahren zum Betreiben eines elektromotorischen Lenksystems bekannt.

Aus der US 2019/0031231 A1 sowie der DE 10 2014 206 468 A1 sind weitere Verfahren zum Betreiben eines elektromotorischen Lenksystems bekannt, bei denen eine Reibungskompensation stattfindet.

Die vorliegende Offenbarung stellt sich die Aufgabe, eine aus Sicht des Fahrers bedarfsgerechte Lenkunterstützung bereitzustellen, insbesondere mit einem begrenzten hierfür erforderlichen Steuerungs- und/oder Regelungsaufwand.

Diese Aufgabe wird durch die Gegenstände der beigefügten unabhängigen Ansprüchen gelöst. Vorteilhafte Weiterbildungen ergeben sich aus den beigefügten abhängigen Ansprüchen. Sofern nicht anders angegeben oder ersichtlich, können sämtliche der vorstehenden Ausführungen und Merkmale auch auf die vorliegende Lösung zutreffen bzw. bei dieser vorgesehen sein.

Vorliegend wird allgemein vorgeschlagen, die Lenkunterstützung eines Fahrers durch z.B. einen Elektromotor variabel zu gestalten und genauer gesagt unterschiedliche Vorgaben zum Ermitteln eines aufzubringenden Unterstützungsmoments und unterschiedliche Kennlinien hierfür zu verwenden. Insbesondere können je nach Betriebssituation und bevorzugt je nach aufgebrachtem Handmoment geeignete Kennlinien zum Ermitteln eines zu erzeugenden Unterstützungsmoments herangezogen werden. Vorteilhafterweise wird dabei zwischen einem Zustand mit niedrigen Handmomenten und/oder gering ausgeprägten und/oder ausbleibenden Zahnstangenbewegungen und einem Zustand mit größer ausgeprägten Handmomenten und/oder stattfindenden Zahnstangenbewegungen unterschieden. Das Verwenden einer Kennlinie ermöglicht ein aufwandarmes Ermitteln umzusetzender Unterstützungsmomente, das sich insbesondere durch einen geringen Rechenaufwand und somit eine schnelle Reaktionszeit auszeichnet.

Vorzugsweise ist vorgesehen, in einem entsprechenden Zustand mit geringen oder keinen Zahnstangenbewegungen höhere Unterstützungsmomente aufzubringen als bei sich bewegender Zahnstange. Zumindest kann dann das Verhältnis von Unterstützungsmoment zu Handmoment höher ausfallen als bei bewegter Zahnstange. Dies mindert die Wahrscheinlichkeit, dass ein vom Fahrer aufgebrachtes Handmoment nicht oder zumindest nicht vollständig in eine Zahnstangenbewegung bzw. eine Radlenkwinkeländerung umgesetzt wird. Es entsteht somit ein natürliches Lenkgefühl mit aus Sicht des Fahrers direkter Umsetzung eines per Lenkhandhabe-Betätigung vorgegebenen Lenkwunsches.

Durch die betriebszustandsabhängige Auswahl von Kennlinien wird eine zuverlässig und einfach umzusetzende Möglichkeit bereitgestellt, die Unterstützungsmomente bedarfsgerecht zu ermitteln und umzusetzen. Insbesondere wird hierdurch aber die Wahrscheinlichkeit erhöht, dass weniger umfangreiche Kompromisse bezüglich des Unterstützungs- bzw. Lenkverhaltens im Vergleich zu bisherigen Lösungen erforderlich sind. Dabei wird für ein Ingangsetzen der Zahnstange aus dem Stillstand eine gesonderte Unterstützungs-Vorgabe hinterlegt, die sich von darauffolgenden Betriebszuständen mit bereits bewegter Zahnstange unterscheidet. Es ist dann nicht zwingend erforderlich, eine Kennlinie vorzugeben oder zu definieren, die für sowohl das Ingangsetzen der Zahnstange als auch das spätere weitere Bewegen der Zahnstange geeignet ist, was mit den einleitend geschilderten Kompromissen zulasten der Direktheit einhergehen kann. Anders ausgedrückt muss mit der vorgestellten Lösung nicht mehr kompromiss behaftet eine Festlegung hinsichtlich eines schwergängigen oder sportlichen Lenkverhaltens bzw. einer entsprechenden Lenkunterstützung getroffen werden, da das anfängliche Bewegen der Zahnstange sowie die hierfür aufgebrachte Unterstützung von darauffolgenden Betriebszuständen durch entsprechende betriebszustandsabhängige Vorgabefunktionen entkoppelt wird.

Insbesondere wird ein Verfahren zum Betreiben eines elektromechanischen Lenksystems eines Fahrzeugs (insbesondere eines Kraftfahrzeugs und ferner insbesondere eines Personenkraftwagens oder Lastkraftwagens) vorgeschlagen, wobei das Verfahren aufweist:
- Überwachen von Zahnstangenbewegungen, beispielsweise durch kontinuierliches Erfassen und/oder Auswerten von Messwerten, die Rückschlüsse auf das Vorliegen und/oder das Ausmaß von Zahnstangenbewegungen ermöglichen;
- Erfassen eines Fahrerlenkwunsches, beispielsweise mittels eines sogenannten Handmomentensensors;
- Bestimmen (oder, anders ausgedrückt, Ermitteln und/oder Festlegen) eines zu erzeugenden motorischen Unterstützungsmoments anhand einer Vorgabefunktion (nämlich anhand der nachstehenden ersten oder zweiten Vorgabefunktion), die das zu erzeugende Unterstützungsmoment nach Maßgabe des Fahrerlenkwunsches vorgibt (d.h. die das zu erzeugende Unterstützungsmoment in Abhängigkeit des Fahrerlenkwunsches definiert);
wobei dann, wenn bei einem Fahrerlenkwunsch keine Zahnstangenbewegung vorliegt, das Unterstützungsmoment mittels einer ersten Vorgabefunktion bestimmt wird, und wobei dann, wenn bei einem Fahrerlenkwunsch eine Zahnstangenbewegung vorliegt, das Unterstützungsmoment mittels einer zweiten Vorgabefunktion bestimmt wird. Das Vorliegen einer Zahnstangenbewegung bzw. das Nicht-Vorliegen hiervon kann jeweils einen Betriebszustand definieren, wobei in Abhängigkeit dieser Betriebszustände dann die entsprechenden Vorgabefunktionen zum Ermitteln eines aufzubringenden Unterstützungsmomentes ausgewählt und/oder aktiviert werden.

Wie nachstehend noch geschildert, können die Zahnstangenbewegungen sensorisch erfasst werden, beispielsweise mittels eines Abstandssensors (z.B. einem kapazitiven, induktiven oder optischen Abstandssensor). Diese können in Abhängigkeit eines gegenüberliegenden Höhen- bzw. Zahnprofils der Zahnstange und genauer gesagt dessen Änderungen eine Bewegung der Zahnstange erfassen.

Zusätzlich oder alternativ können Zahnstangenbewegungen durch Auswerten von Betriebsgrößen des Unterstützungsmotors ermittelt werden. Es kann also sozusagen indirekt anhand dieser Betriebsgrößen auf Zahnstangenbewegungen geschlossen werden. Dem liegt der Gedanke zugrunde, dass der Elektromotor über z.B. ein Ritzel im Wesentlichen spielfrei mit der Zahnstange verbunden ist. Insbesondere Drehzahländerungen des Elektromotors und/oder Änderungen von dessen Rotorposition (welches sämtliche Beispiele für Betriebsgrößen des Elektromotors sind) können daher als indiziell für entsprechende Zahnstangenbewegungen sein.

Der Fahrerlenkwunsch kann mit einem Handmomentensensor gemäß gängiger Varianten des Standes der Technik ermittelt werden. Beispielsweise kann hierfür ein sogenannter Drehstab verwendet werden, der nach Maßgabe einer Rotation einer Lenkhandhabe und/oder einer hiermit verbundenen Lenkstange verdreht wird. Derartige Sensoren arbeiten in der Regel hochgenau, sodass sie bereits bei geringen aufgebrachten Handmomenten des Fahrzeugfahrers einen Lenkwunsch anzeigen. Aufgrund von z.B. vorliegender Reibungsverhältnisse innerhalb der Lenkung oder aber Lenkwiderständen aufgrund von Wechselwirkungen zwischen dem Fahrzeugrad und dem Fahrzeuguntergrund wird ein entsprechender Lenkwunsch nicht immer unmittelbar in eine Zahnstangenbewegung und somit eine Lenkaktion (bzw. Lenkwinkeländerung der Fahrzeugräder) umgesetzt. Im Rahmen der vorgeschlagenen Lösung kann also bei entsprechend erkanntem Fahrerlenkwunsch bzw. Handmomentensensorsignal und gleichzeitig ausbleibender Zahnstangenbewegung, wie z.B. anhand der Elektromotor-Betriebsgrößen erkannt, ein erster Betriebszustand und kann bei bewegter Zahnstange ein zweiter Betriebszustand erkannt werden. In Abhängigkeit hiervon können dann die geschilderten Vorgabefunktionen ausgewählt werden.

Der Zusammenhang zwischen Fahrerlenkwunsch und Unterstützungsmoment ist dabei bevorzugt eindeutig. Anschließend kann der Elektromotor des elektromechanischen Lenksystems und insbesondere einer Leistungselektronik hiervon geeignet angesteuert werden, um dieses Unterstützungsmoment aufzubringen. Statt von einer Vorgabefunktion kann allgemeiner von einem Zusammenhang, einer Vorgabe oder einem Abhängigkeitsverhältnis gesprochen werden.

Zusätzlich können beim Ermitteln des Unterstützungsmoments auch andere Fahrzeuggrößen berücksichtigt werden, insbesondere die Fahrzeuggeschwindigkeit oder eine Querbeschleunigung.

Die Vorgabefunktionen und die hiervon definierten Zusammenhänge bzw. Abhängigkeiten zwischen Unterstützungsmoment und Fahrerlenkwunsch sind bevorzugt z.B. seitens des Fahrzeugherstellers vorab hinterlegt und/oder feststehend in einem nachstehend erläuterten Steuergerät gespeichert. Je nach vorliegendem Betriebszustand (d.h. dem Vorliegen oder Ausbleiben einer Zahnstangenbewegung) kann zum Ermitteln des Unterstützungsmoment dann die geeignete Vorgabefunktion ausgewählt werden.

Prinzipiell kann vorgesehen sein, dass die erste Vorgabefunktion solange verwendet wird, bis nach Erfassen des Fahrerlenkwunsches eine Zahnstangenbewegung eintritt. Anschließend kann zu der zweiten Vorgabefunktion gewechselt werden. Zusammengefasst sieht eine weitere Ausführungsform demnach vor, dass dann, wenn eine Zahnstangenbewegung einsetzt, von der ersten Vorgabefunktion zu der zweiten Vorgabefunktion gewechselt wird.

Eine Weiterbildung sieht vor, dass mit der ersten Vorgabefunktion größere Unterstützungsmomente vorgebbar sind als mit der zweiten Vorgabefunktion. Dies kann sich zumindest auf einen bestimmten Wertebereich des Handmoments beziehen und/oder auf eine Änderungsrate des Handmoments bzw. allgemein des Fahrerlenkwunsches. Anders ausgedrückt kann vorgesehen sein, dass mit der ersten Vorgabefunktion über einen begrenzten Wertebereich und insbesondere eine Änderung des Fahrerlenkwunsches größere Unterstützungsmomente vorgebbar sind als bei einem vergleichbaren Wertebereich und/oder einer vergleichbaren Änderung des Fahrerwunsches im Falle der zweiten Vorgabefunktion. Insbesondere kann die erste Vorgabefunktion eine steilere Kennlinie umfassen oder definieren als die zweite Vorgabefunktion. Gemäß einer Variante kann der Fahrer also beim anfänglichen Auslenken gegenüber einer Gleichgewichtslage des Lenksystems eine höhere Unterstützung erfahren als dies dann im weiteren Verlauf bei vorliegender Zahnstangenbewegung der Fall ist. Zumindest das Verhältnis aus Unterstützungsmoment und Handmoment kann bei der ersten Vorgabefunktion höher ausfallen als bei der zweiten.

Dies ist dahingehend vorteilhaft, als dass die Zahnstange aufgrund der erhöhten Unterstützungsmomente vergleichsweise schnell in Bewegung versetzt werden kann, es also aus Sicht des Fahrers zu keinen oder lediglich geringen Verzögerungen beim Umsetzen von dessen Lenkwunsch kommt.

Prinzipiell können die Vorgabefunktionen voneinander unterschiedlich sein und/oder unterschiedliche Zusammenhänge zwischen Fahrerlenkwünschen und Unterstützungsmomenten definieren. Eine Weiterbildung sieht vor, dass die zweite Vorgabefunktion einen proportionalen Zusammenhang zwischen Fahrerlenkwunsch bzw. Fahrerlenkwünschen und zu erzeugenden Unterstützungsmomenten definiert. Vorgegebene Fahrerlenkwünsche können also gemäß einem feststehenden Verhältnis in entsprechende Unterstützungsmomente umgesetzt werden. Alternativ oder zusätzlich kann vorgesehen sein, dass die erste Vorgabefunktion einen nicht-proportionalen Zusammenhang zwischen Fahrerlenkwunsch (bzw. Fahrerlenkwünschen) und zu erzeugenden Unterstützungsmomenten definiert. Beispielsweise kann hier ein konstantes Unterstützungsmoment vorgesehen sein oder aber ein mit zunehmenden Handmomenten bzw. Fahrerlenkwünschen exponentiell zunehmendes Unterstützungsmoment, um die Zahnstange möglichst schnell in Bewegung versetzen zu können.

Vorteilhaft sind diese Varianten dahingehend, als dass Verzögerungen aufgrund ausbleibender Zahnstangenbewegungen geringgehalten werden können, anschließend aber aufgrund des proportionalen Verhältnisses ein erwartetes bzw. gewohntes Lenkverhalten einstellbar ist, beispielsweise durch Vorsehen einer sportlichen oder komfortablen Unterstützungskennlinie.

Gemäß einer Weiterbildung wird das Vorliegen einer Zahnstangenbewegung in Bezug auf (oder, mit anderen Worten, relativ zu) eine(r) Gleichgewichtslage überwacht, wobei die Gleichgewichtslage variabel festlegbar ist. Statt von einer Gleichgewichtslage könnte auch von einer Referenzlage gesprochen werden. Allgemein kann sich eine Gleichgewichtslage dadurch auszeichnen, dass ein stabiler Radlenkwinkel vorliegt und/oder eingestellt wurde. Dies kann z.B. bei einer Geradeausfahrt der Fall sein, aber auch einer Kurvenfahrt mit einem konstant eingestellten Radlenkwinkel, beispielsweise beim Durchfahren einer vergleichsweise langen Kurve ohne Änderung einer Lenkhandhabebetätigung seitens des Fahrers. Das variable Festlegen der Gleichgewichtslage kann umfassen, dass Auslenkungen nicht nur ausschließlich gegenüber einer Neutralstellung (d.h. einer Geradeausfahrt) betrachtet werden, sondern eben auch in Bezug auf einen konstanten Radlenkwinkel bei der vorstehend geschilderten Kurvenfahrt. Liegt also eine entsprechende Kurvenfahrt vor, wird zumindest temporär auch eine Zahnstangenbewegung ausbleiben, da der eingestellte Radlenkwinkel aufrechterhalten werden soll.

Beispielsweise beim Ausfahren aus der Kurve oder aber bei Änderungen des Fahrerlenkwunsches kann dann analog zur vorstehend geschilderten Weise ermittelt werden, dass bei dem sich ändernden Fahrerlenkwunsch zunächst keine Zahnstangenbewegung vorliegt. Darauf basierend dann die erste Vorgabefunktion gewählt werden, um ein bedarfsgerechtes Unterstützungsmoment zu erzeugen, und kann anschließend zur zweiten Vorgabefunktion gewechselt werden. Dies ermöglicht das Umsetzen einer bedarfsgerechten Lenkunterstützung in verschiedensten Fahrsituationen und insbesondere bei dem geschilderten Durchfahren von Kurven.

Wie geschildert, sieht eine Weiterbildung vor, dass die Überwachung der Zahnstangenbewegungen bzw. das Ermitteln von Zahnstangenbewegungen basierend auf Betriebsgrößen eines Lenkunterstützungsmotors erfolgt. Dies stellt eine kostengünstige und zuverlässige Variante dar, bei der keine zusätzlich vorzusehende Sensorik zwingend erforderlich ist.

Die Erfindung betrifft auch ein Lenksystem für ein Fahrzeug, wobei das Lenksystem aufweist:
- eine Lenkhandhabe (insbesondere ein Lenkrad), mittels derer ein Fahrerlenkwunsch vorgebbar ist, insbesondere durch Aufbringen eines Handmoments durch den Fahrer;
- einen (bevorzugt elektrischen) Lenkunterstützungsmotor, der dazu eingerichtet ist, ein Unterstützungsmoment zu erzeugen und insbesondere auf eine Zahnstange aufzubringen;
- eine Zahnstange, die unter Einwirken des Unterstützungsmoments (und bevorzugt auch des Handmoments) unter Einstellen eines Radlenkwinkels verlagerbar ist, die also bevorzugt das Unterstützungsmoment in eine Änderung des Radlenkwinkels infolge einer eigenen Verlagerung umsetzt; und
- ein Steuergerät zum Ansteuern des Lenkunterstützungsmotors,
wobei das Steuergerät dazu eingerichtet ist, eine Zahnstangenbewegung zu überwachen und dann, wenn bei einem Fahrerlenkwunsch keine Zahnstangenbewegung vorliegt, mittels einer ersten Vorgabefunktion einen Unterstützungsmoment zu bestimmen (und bevorzugt den Lenkunterstützungsmotor zum Erzeugen dieses Unterstützungsmoments anzusteuern), und dann, wenn bei einem Fahrerlenkwunsch eine Zahnstangenbewegung vorliegt, das Unterstützungsmoment mittels einer zweiten Vorgabefunktion zu bestimmen (und bevorzugt den Lenkunterstützungsmotor zum Erzeugen dieses Unterstützungsmoments anzusteuern).

Dabei sind die vorab hinterlegten Vorgabefunktionen als Kennlinien ausgebildet.

Die Erfindung betrifft auch ein Steuergerät für ein derartiges Lenksystem. Allgemein kann das Steuergerät elektrisch und/oder digital betreibbar sein. Es kann wenigstens eine Prozessoreinrichtung aufweisen, insbesondere einen Mikroprozessor. Ferner kann es eine Speichereinrichtung umfassen, auf der bevorzugt Programmanweisungen hinterlegt sind. Durch Ausführen der Programmanweisungen kann das Steuergerät die hierin geschilderten Funktionen und/oder Betriebszustände bereitstellen.

Allgemein kann das Lenksystem und kann das Steuergerät dazu eingerichtet sein, ein Verfahren gemäß jeglichen der hierin geschilderten Aspekte auszuführen. Insbesondere können das Lenksystem und das Steuergerät jegliche weiteren Merkmale, Aspekte und Varianten umfassen, um sämtliche der hierin geschilderten Betriebszustände, Verfahrensmaßnahmen oder Effekte bereitzustellen bzw. auszuführen. Sämtliche Ausführungen zu und Weiterbildungen von Verfahrensmerkmalen können auf Merkmale des Lenksystems bzw. des Steuergeräts ebenso zutreffen bzw. bei diesen vorgesehen sein.

Schließlich betrifft die Erfindung auch ein Fahrzeug, das ein Lenksystem der vorstehend geschilderten Art umfasst.

Ausführungsbeispiele der Erfindung werden im Folgenden anhand der beigefügten schematischen Figuren erläutert.
- Fig. 1: zeigt eine schematische Darstellung eines Lenksystems gemäß einem ersten Ausführungsbeispiel, das ein Verfahren gemäß einem Ausführungsbeispiel ausführt.
- Fig. 2: zeigt ein Ablaufschema dieses Verfahrens.

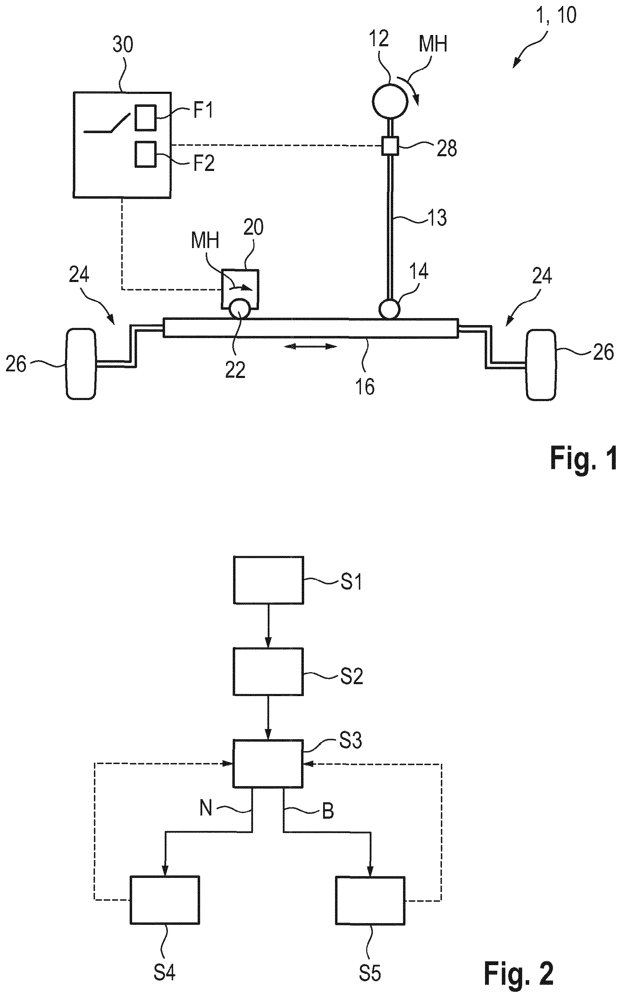

In Fig. 1 ist ein Lenksystem 10 eines ansonsten nicht detailliert abgebildeten Fahrzeugs (Kraftfahrzeug) 1 schematisch dargestellt. Gezeigt ist eine Lenkhandhabe 12 in Form eines Lenkrades. Mittels diesem kann der Fahrer durch Aufbringen eines Handmoments MH einen Lenkwunsch vorgeben. Die Lenkhandhabe 12 ist drehstarr mit einer Lenkstange 13 verbunden. An dem von der Lenkhandhabe 12 entfernten Ende weist die Lenkstange 13 ein Ritzel 14 auf. Über dieses steht sie in Eingriff mit der Verzahnung einer langgestreckt dargestellten Zahnstange 16. Das Ritzel 14 ist nach Maßgabe des Handmoments MH drehbar. Die Rotationsachse steht dabei senkrecht auf der Blattebene. Die Verdrehung des Ritzels 14 resultiert entsprechend in einer linearen Verlagerung der Zahnstange 16 innerhalb der Blattebene gemäß dem abgebildeten Doppelpfeil.

Mit der Zahnstange 16 im Eingriff steht auch ein Lenkunterstützungsmotor 20 (im Folgenden lediglich als Motor bezeichnet). Dieser treibt ein weiteres Ritzel 22 an, dessen Rotationsachse wiederum senkrecht auf der Blattebene steht. In analoger Weise zum Handmoment MH kann der Motor 20 ein Unterstützungsmoment MU erzeugen, das über das Ritzel 22 in eine lineare Verlagerung der Zahnstange 16 umsetzbar ist.

Die Zahnstange 16 ist über nicht detailliert dargestellte weitere mechanische Lenkglieder 24 mit den Fahrzeugrädern 26 einer im abgebildeten Fall Vorderachse verbunden. Nach Maßgabe der linearen Verlagerung der Zahnstange 16 sind die Lenkglieder 24 in herkömmlicher Weise derart betätigbar, dass die Fahrzeugräder 26 zum Variieren des Radlenkwinkels um eine in Fig. 1 vertikale Raumachse verschwenken.

Fig. 1 zeigt auch einen Handmomentensensor 28, der gemäß bekannter Bauart einen hochgenauen Drehstab bzw. Torsionsstab umfassen kann. Der Handmomentensensor 28 liefert einen Handmomentenmesswert über eine gestrichelt dargestellte Datenverbindung an ein Steuergerät 30. Das Steuergerät 30 ist auch mit dem Motor 20 verbunden. Es kann von dem Motor 20 Betriebsgrößen erhalten, aus denen in der vorstehend geschilderten Weise auf Zahnstangenbewegungen geschlossen werden kann. Das Steuergerät 30 kann aber (wiederum über eine gestrichelt dargestellte Datenverbindung) auch Steuersignale an den Motor 20 und insbesondere dessen Leistungselektronik ausgeben, um diesen zum Erzeugen eines gewünschten Unterstützungsmoments MU zu veranlassen.

Nicht gesondert gezeigt ist, dass das Steuergerät 30 wenigstens eine Prozessoreinrichtung aufweist, um die Messwerte des Handmomentensensors 28 auszuwerten und Steuersignale für den Motor 20 zu erzeugen.

Gezeigt ist allerdings mittels einer lediglich zu Erläuterungszwecken vorgesehenen schematischen Darstellung, dass das Steuergerät 30 über unterschiedliche Vorgabefunktionen F1, F2 verfügt. Diese definieren jeweils Zusammenhänge zwischen einem gemessenen Handmoment MH (also einem vorliegenden Fahrerlenkwunsch) und einem dabei bereitzustellenden Unterstützungsmoment MU. Die Vorgabefunktionen F1, F2 sind bevorzugt in einer nicht gesondert dargestellten Speichereinrichtung des Steuergeräts 30 hinterlegt. Insbesondere sind sie vorab hinterlegt, z.B. seitens eines Fahrzeugherstellers, sodass auf diese im weiteren Betrieb des Fahrzeugs 1 zurückgegriffen werden kann. Im gezeigten Beispiel sind die beiden Vorgabefunktionen F1, F2 Kennlinien bzw. definieren diese Kennlinien, nach deren Maßgabe ein Lenkwunsch bzw. Handmoment MH in ein Unterstützungsmoment MU umgesetzt wird.

Angedeutet mit einem rein zu Erläuterungszwecken abgebildeten Schaltelement ist, dass das Steuergerät wahlweise auf die erste Vorgabefunktion F1 oder die zweite Vorgabefunktion F2 zugreift bzw. zwischen diesen Vorgabefunktionen F1, F2 wechselt.

Vorliegend erfolgt dieser Wechsel dadurch, dass überprüft wird, welcher Bewegungszustand der Zahnstange 16 bei einem vorliegenden Fahrerlenkwunsch vorliegt. Genauer gesagt ermittelt das Steuergerät 30, welcher von zwei vordefinierten Betriebszuständen hinsichtlich der Zahnstange 16 aktuell vorliegt.

Bei einem ersten Betriebszustand liegt ein Fahrerlenkwunsch vor (also ein von null verschiedenes Handmoment MH und/oder eine Änderung des Handmoments MH), aber es wird keine Zahnstangenbewegung registriert. Ein zweiter Betriebszustand liegt hingegen dann vor, wenn die Zahnstange 16 sich bewegt und insbesondere gleichzeitig auch ein von null verschiedenes Handmoment MH und/oder eine Änderung des Handmoments MH vorliegt.

Das Steuergerät 30 ist dazu eingerichtet, durch Auswerten der Signale des Handmomentensensors 28 sowie der Betriebsgrößen des Motors 20 das Vorliegen des ersten oder zweiten Betriebszustands zu ermitteln.

Wenn der erste Betriebszustand vorliegt, ist das Steuergerät 30 ferner dazu eingerichtet, die erste Vorgabefunktion F1 zum Ermitteln eines umzusetzenden Unterstützungsmoments MU zu verwenden. Liegt hingegen der zweite Betriebszustand vor, wird die zweite Vorgabefunktion F2 verwendet.

Vorliegend sind die Vorgabefunktion F1, F2 derart definiert, dass mit der ersten Vorgabefunktion F1 im Vergleich größere Unterstützungsmomente selbst bei nur kleinen Änderungen des Handmoments MH (oder auch kleinen Absolutwerten hiervon) erzeugbar sind, als dies insbesondere bei gleichen Handmomentenwerten und/oder Handmomentenänderungen mittels der zweiten Vorgabefunktion F2 der Fall ist. Dem liegt der Gedanke zugrunde, dass der Fahrer im ersten Betriebszustand aufgrund der ausbleibenden Zahnstangenbewegung das Lenksystem 10 als verzögernd und/oder schwergängig empfinden könnte. Diesem soll dadurch vorgebeugt werden, dass mittels der in diesem Betriebszustand erhöhten Unterstützungsmomente MU die Zahnstange 16 möglichst schnell in Bewegung versetzt wird. Anschließend können dann geringere Unterstützungsmomente MU vorgesehen sein, welche dem Fahrer ein direktes Lenkgefühl vermitteln.

Als ein allgemeiner Aspekt und nicht beschränkt auf die Details des Ausführungsbeispiels kann also vorgesehen sein, dass bei einem Wechsel von der ersten Vorgabefunktion F1 zu der zweiten Vorgabefunktion F2 das Unterstützungsmoment MU zumindest kurzfristig reduziert wird.

In Fig. 2 ist ein Ablaufschema des von dem Lenksystem 10 ausgeführten Verfahrens gezeigt. In einem Schritt S1 wird ein Fahrerlenkwunsch durch Erfassen eines Handmoments MH und/oder einer Handmomentenänderung ermittelt. Die entsprechend von dem Handmomentensensor 28 erzeugten Messsignale werden an das Steuergerät 30 übermittelt. In einem Schritt S2 ermittelt das Steuergerät 30 zudem, ob eine Zahnstangenbewegung vorliegt oder nicht. In einem Schritt S3 wird daraufhin ermittelt, welcher der vorstehend geschilderten Betriebszustände vorliegt, also ob sich die Zahnstange 16 bereits bewegt oder nicht. Wenn sich die Zahnstange 16 noch nicht bewegt (Pfeil N), wird auf das Vorliegen des ersten Betriebszustands geschlossen und ein Unterstützungsmoment MU mittels der vorstehend erläuterten ersten Vorgabefunktion bzw. Kennlinie F1 vorgegeben. Anschließend kann, wie durch eine gestrichelte Linie angedeutet, zu dem Schritt S3 zurückgekehrt werden, um zu überprüfen, ob der erste Betriebszustand dadurch beendet wurde, d.h. die Zahnstange 16 in Bewegung versetzt wurde. Wird ermittelt, dass sich die Zahnstange bewegt (Pfeil B), wird hingegen mittels der zweiten Vorgabefunktion bzw. Kennlinie F2 das zu erzeugende Unterstützungsmoment MU ermittelt und wird der Motor 20 entsprechend angesteuert. Auch in diesem Fall kann wieder zu dem Schritt S3 zurückgekehrt werden (siehe gestrichelter Pfeil) und kann bei der nächsten Handmomentenänderung erneut überprüft werden, welcher der hierin geschilderten Betriebszustände vorliegt.

### Bezugszeichenliste

- 1: Fahrzeug
- 10: Lenksystem
- 12: Lenkhandhabe
- 13: Lenkstange
- 14: Ritzel
- 16: Zahnstange
- 20: Unterstützungsmotor (Motor)
- 22: Ritzel
- 24: Lenkglied
- 26: Fahrzeugrad
- 28: Handmomentensensor
- 30: Steuergerät
- MH: Handmoment
- MU: Unterstützungsmoment
- F1: erste Vorgabefunktion
- F2: zweite Vorgabefunktion

## Patentansprüche

1. Verfahren zum Betreiben eines elektromotorischen Lenksystems (10) eines Fahrzeugs (1),
aufweisend:
- Überwachen von Zahnstangenbewegungen;
- Erfassen eines Fahrerlenkwunsches;
- Bestimmen eines zu erzeugenden motorischen Unterstützungsmoments (MU) anhand einer Vorgabefunktion (F1, F2), die das zu erzeugende Unterstützungsmoment (MU) nach Maßgabe des Fahrerlenkwunsches vorgibt;
wobei dann, wenn bei einem erfassten Fahrerlenkwunsch keine Zahnstangenbewegung vorliegt, das Unterstützungsmoment (MU) mittels einer ersten Vorgabefunktion (F1) bestimmt wird, und wobei dann, wenn bei einem erfassten Fahrerlenkwunsch eine Zahnstangenbewegung vorliegt, das Unterstützungsmoment (MU) mittels einer zweiten Vorgabefunktion (F2) bestimmt wird,
**dadurch gekennzeichnet, dass**
die vorab hinterlegte Vorgabefunktionen (F1, F2) jeweils kennlinienbasiert sind, wobei die Kennlinien einen Zusammenhang zwischen dem Fahrerlenkwunsch und zu erzeugenden Unterstützungsmomenten (MU) definieren.

2. Verfahren nach Anspruch 1,
**dadurch gekennzeichnet, dass** dann, wenn nach zunächst nicht vorliegender eine Zahnstangebewegung einsetzt, von der ersten Vorgabefunktion (F1) zu der zweiten Vorgabefunktion (F2) gewechselt wird.

3. Verfahren nach Anspruch 1 oder 2,
**dadurch gekennzeichnet, dass** mit der ersten Vorgabefunktion (F1) größere Unterstützungsmomente vorgebbar sind, als mit der zweiten Vorgabefunktion (F2).

4. Verfahren nach einem der vorangehenden Ansprüche,
**dadurch gekennzeichnet, dass** die zweite Vorgabefunktion (F2) einen proportionalen Zusammenhang zwischen Fahrerlenkwünschen und zu erzeugenden Unterstützungsmomenten (MU) definiert; und/oder
dass die erste Vorgabefunktion (F1) einen nicht-proportionalen Zusammenhang zwischen Fahrerlenkwünschen und zu erzeugenden Unterstützungsmomenten (MU) definiert.

5. Verfahren nach einem der vorangehenden Ansprüche,
**dadurch gekennzeichnet, dass** das Vorliegen einer Zahnstangenbewegung in Bezug auf eine Gleichgewichtslage überwacht wird, wobei die Gleichgewichtslage variabel festlegbar ist.

6. Verfahren nach einem der vorangehenden Ansprüche,
**dadurch gekennzeichnet, dass** die Zahnstangenbewegungen basierend auf Betriebsgrößen eines Lenkunterstützungsmotors (20) ermittelt werden.

7. Lenksystem (10) für ein Fahrzeug (1), mit:
- eine Lenkhandhabe (12), mittels derer ein Fahrerlenkwunsch vorgebbar ist;
- einem Lenkunterstützungsmotor (20), der dazu eingerichtet ist, ein Unterstützungsmoment (MU) zu erzeugen;
- einer Zahnstange (16), die unter Einwirken des Unterstützungsmoments (MU) und unter Einstellen eines Radlenkwinkels verlagerbar ist; und
- einem Steuergerät (30) zum Ansteuern des Lenkunterstützungsmotors (20),
wobei das Steuergerät (30) dazu eingerichtet ist, eine Zahnstangenbewegung zu überwachen und dann, wenn bei einem Fahrerlenkwunsch keine Zahnstangenbewegung vorliegt, mittels einer ersten Vorgabefunktion (F1) ein Unterstützungsmoment zu bestimmen,
und dann, wenn eine Zahnstangebewegung vorliegt, das Unterstützungsmoment (MU) mittels einer zweiten Vorgabefunktion (F2) zu bestimmen,
**dadurch gekennzeichnet, dass**
die vorab hinterlegten Vorgabefunktionen (F1, F2) jeweils kennlinienbasiert sind, wobei die Kennlinien einen Zusammenhang zwischen dem Fahrerlenkwunsch und zu erzeugenden Unterstützungsmomenten (MU) definieren.

8. Steuergerät (30),
für ein Lenksystem (10) nach Anspruch 7.

9. Fahrzeug (1),
umfassend ein Lenksystem (10) nach Anspruch 7.

## Claims

1. Method for operating an electromotive steering system (10) of a vehicle (1),
comprising:
- monitoring steering rack movements;
- detecting a driver's steering request;
- determining a motor assistance torque (MU) to be generated using a specification function (F1, F2) which specifies the assistance torque (MU) to be generated in accordance with the driver's steering request;
if there is no steering rack movement when a driver's steering request is detected, the assistance torque (MU) being determined by means of a first specification function (F1), and if there is a steering rack movement when a driver's steering request is detected, the assistance torque (MU) being determined by means of a second specification function (F2),
**characterized in that**
the pre-stored specification functions (F1, F2) are each based on characteristic curves, the characteristic curves defining a relationship between the driver's steering request and the assistance torques (MU) to be generated.

2. Method according to claim 1,
**characterized in that** if a steering rack movement begins after initially not being present, a change is made from the first specification function (F1) to the second specification function (F2).

3. Method according to claim 1 or 2,
**characterized in that** larger assistance torques can be specified with the first specification function (F1) than with the second specification function (F2).

4. Method according to any of the preceding claims,
**characterized in that** the second specification function (F2) defines a proportional relationship between the driver's steering requests and the assistance torques (MU) to be generated; and/or
**in that** the first specification function (F1) defines a non-proportional relationship between the driver's steering requests and the assistance torques (MU) to be generated.

5. Method according to any of the preceding claims,
**characterized in that** the presence of a steering rack movement is monitored with respect to an equilibrium position, it being possible to variably set the equilibrium position.

6. Method according to any of the preceding claims,
**characterized in that** the steering rack movements are determined based on operating variables of a steering assistance motor (20).

7. Steering system (10) for a vehicle (1), comprising:
- a steering handle (12), by means of which a driver's steering request can be specified;
- a steering assistance motor (20) which is configured to generate an assistance torque (MU);
- a steering rack (16) which can be moved under the action of the assistance torque (MU) and by adjusting a wheel steering angle; and
- a control unit (30) for controlling the steering assistance motor (20), the control unit (30) being configured to monitor a steering rack movement and, if there is no steering rack movement during a driver's steering request, to determine an assistance torque by means of a first specification function (F1),
and, if there is a steering rack movement, to determine the assistance torque (MU) by means of a second specification function (F2),
**characterized in that**
the pre-stored specification functions (F1, F2) are each based on characteristic curves, the characteristic curves defining a relationship between the driver's steering request and the assistance torques (MU) to be generated.

8. Control unit (30)
for a steering system (10) according to claim 7.

9. Vehicle (1)
comprising a steering system (10) according to claim 7.

## Revendications

1. Procédé permettant de faire fonctionner un système de direction (10) à moteur électrique d'un véhicule (1),
présentant :
- la surveillance de mouvements de crémaillère de direction ;
- la saisie d'une demande de direction de conducteur ;
- la détermination d'un couple d'assistance (MU) motorisé à générer à l'aide d'une fonction de prescription (F1, F2) qui prescrit le couple d'assistance (MU) à générer en fonction de la demande de direction de conducteur ;
dans lequel, lorsqu'aucun mouvement de crémaillère de direction n'est présent lorsqu'une demande de direction de conducteur est détectée, le couple d'assistance (MU) est déterminé au moyen d'une première fonction de prescription (F1), et dans lequel, lorsqu'un mouvement de crémaillère de direction est présent lorsqu'une demande de direction de conducteur est détectée, le couple d'assistance (MU) est déterminé au moyen d'une seconde fonction de prescription (F2),
**caractérisé en ce que**
les fonctions de prescription (F1, F2) prédéfinies sont respectivement basées sur des courbes caractéristiques, dans lequel les courbes caractéristiques définissent une relation entre la demande de direction de conducteur et des couples d'assistance (MU) à générer.

2. Procédé selon la revendication 1,
**caractérisé en ce que,** lorsqu'un mouvement de crémaillère de direction commence après un mouvement initialement inexistant, on passe de la première fonction de prescription (F1) à la seconde fonction de prescription (F2).

3. Procédé selon la revendication 1 ou 2,
**caractérisé en ce que** des couples d'assistance plus importants peuvent être prescrits avec la première fonction de prescription (F1) qu'avec la seconde fonction de prescription (F2).

4. Procédé selon l'une des revendications précédentes,
**caractérisé en ce que** la seconde fonction de prescription (F2) définit une relation proportionnelle entre les demandes de direction de conducteur et les couples d'assistance (MU) à générer ; et/ou
**en ce que** la première fonction de prescription (F1) définit une relation non proportionnelle entre les demandes de direction de conducteur et les couples d'assistance (MU) à générer.

5. Procédé selon l'une des revendications précédentes,
**caractérisé en ce que** la présence d'un mouvement de crémaillère de direction est surveillée par rapport à une position d'équilibre, dans lequel la position d'équilibre peut être fixée de manière variable.

6. Procédé selon l'une des revendications précédentes,
**caractérisé en ce que** les mouvements de crémaillère de direction sont déterminés sur la base de grandeurs de fonctionnement d'un moteur d'assistance de direction (20).

7. Système de direction (10) pour un véhicule (1), comportant :
- une manette de direction (12), au moyen de laquelle une demande de direction de conducteur peut être prescrite ;
- un moteur d'assistance de direction (20) configuré pour générer un couple d'assistance (MU) ;
- une crémaillère de direction (16) qui peut être déplacée sous l'action du couple d'assistance (MU) et en réglant un angle de braquage de roue ; et
- un appareil de commande (30) pour la commande du moteur d'assistance de direction (20), dans lequel l'appareil de commande (30) est configuré pour surveiller un mouvement de crémaillère de direction et, lorsqu'aucun mouvement de crémaillère de direction n'est présent lorsqu'une demande de direction de conducteur est présente, pour déterminer un couple d'assistance au moyen d'une première fonction de prescription (F1) et, lorsqu'un mouvement de crémaillère de direction est présent, pour déterminer le couple d'assistance (MU) au moyen d'une seconde fonction de prescription (F2),
**caractérisé en ce que**
les fonctions de prescription (F1, F2) prédéfinies sont respectivement basées sur des courbes caractéristiques, dans lequel les courbes caractéristiques définissent une relation entre la demande de direction de conducteur et des couples d'assistance (MU) à générer.

8. Appareil de commande (30),
pour un système de direction (10) selon la revendication 7.

9. Véhicule (1),
comprenant un système de direction (10) selon la revendication 7.
